# EUROPEAN PATENT SPECIFICATION

(11) **EP 2 818 034 B1**
(45) Date of publication and mention of the grant of the patent: **11.01.2017**
(21) Application number: 13174400.5
(22) Date of filing: 28.06.2013
(51) Int. Cl.: A01D 34/74, A01D 34/82

(54) **Lawnmower with skid**
Rasenmäher mit Kufe
Tondeuse à gazon avec patin

(43) Date of publication of application: 31.12.2014
(73) Proprietor: ROBERT BOSCH GMBH, 70442 Stuttgart (DE)
(72) Inventor: Aristidou, A. Andrew, Bury St Edmunds Suffolk IP33 2AN (GB)

(56) References cited:
- GB-A- 2 317 320
- GB-A- 2 352 956
- GB-A- 2 371 202

## Description

The present invention relates to a lawnmower with a skid.

It is known to provide a roller at the rear of a lawnmower, as an additional item either between or behind the rear wheels, for the purpose of smoothing and directing the blades of grass to provide a striped appearance to the lawn.

Various configurations of additional rollers for machines also fitted with rear wheels as the primary means of support have been employed in the past. A first design of roller moves with the height-of-cut, as the cutting deck or chassis is raised relative to the wheels, and this may be achieved by fixing the roller to the cutting deck or chassis. This design contacts the ground only when the lowest heights of cut are selected. A second configuration is one in which the roller is mounted to the chassis but is maintained in a fixed position relative to the wheels and in contact with the ground at all heights-of-cut. Examples of mechanisms to achieve this are disclosed in GB-A-2352956 and GB-A-2371202.

Rollers of any configuration are relatively expensive components as they require one or more roller sections, support brackets, bearings and possibly an axle. Another problem with rollers, and particularly those which are permanently in contact with the ground, is that they can generate an unpleasant noise or rattle when rolled over an uneven surface.

Attempts have been made to achieve a striped lawn effect by using a skid instead of a roller. A skid does not involve any rotating parts and is therefore a less expensive component to manufacture. Skids are traditionally manufactured of flexible rubber type materials and are fixed to the cutting deck or chassis such that they rest on the ground under their own weight regardless of the height-of-cut setting. Their primary purpose is to prevent objects being ejected towards the operator from the blades and as such they are not particularly effective at providing a well-defined stripe.

The present invention seeks to address problems with prior art roller and skid designs.

In accordance with the invention, there is provided a lawnmower comprising a chassis, a pair of rear wheels with one wheel mounted at each side of the chassis, and a transversely mounted skid which extends substantially the full width of the spacing between the rear wheels, the lower surface of the skid having a substantially uniform profile across the majority of its width, wherein the chassis and the pair of rear wheels are movable relative to one another to adjust the height-of-cut of the lawnmower within a range of heights-of-cut and wherein the skid moves relative to the chassis during adjustment of the height-of-cut such that the skid is maintained at or above a minimum height position for the full height-of-cut adjustment range, the minimum height position being a position in which the lowest point of the lower surface profile of the skid is at a predetermined height above a transverse line connecting the lowest point of each wheel.

The lower surface of the skid is effectively the surface of the skid which comes into contact with the ground and/or the grass in use, so it is the part of the skid which performs the function of smoothing and directing the blades of grass to provide a striped appearance to the lawn.

The lower surface profile is the shape of the lower surface when viewed from a transverse direction, so effectively a cross-section of the skid. The profile may be any suitable shape to perform the required function, including straight, curved, angled, serpentine or circular. Preferably, the lower edge profile of the skid is substantially curved or circular to form a generally cylindrical transverse lower surface portion of the skid.

The lowest point of the lower surface profile will be straightforward to determine. For example, in the case of a curved or circular profile, this will be the lowest point on the curved or circular profile, closest to the ground in use. In the case of a straight profile which is parallel to the ground in use, the lowest point may in fact be a line. When viewed in plan, with the lower surface of the skid having a substantially uniform profile across the majority of its width, a lowest transverse line or plane will be formed.

In accordance with the invention, the lower surface of the skid has a substantially uniform profile across the majority of its width. It is envisaged that the lower surface profile will be uniform across substantially the full width of the skid, but it may be desirable or necessary to alter the profile at the side edges of the skid, for example, to accommodate support brackets.

In preferred embodiments, the lower surface of the skid may be provided with longitudinally-oriented ribs or ridges to assist grass blade separation. Such ribs may extend downwards from the lower surface profile, and if so, are ignored when determining the lowest point of the lower surface profile. They may therefore extend below the predetermined height when the skid is in the minimum height position.

In accordance with the invention, the minimum height position is a position in which the lowest point of the lower surface profile of the skid is at a predetermined height above a transverse line connecting the lowest point of each wheel. The predetermined height is greater than zero, and is preferably greater than about 3mm, greater than about 5mm, greater than about 8mm, greater than about 10mm, greater than about 15mm, or greater than about 20mm.

The predetermined height may have a range of acceptable values such that improved performance compared to the prior art designs is achieved and such that the function of providing a striped appearance to the lawn is still performed. The predetermined height may therefore preferably be between any of the values mentioned above and about 50mm, about 40mm, about 30mm or about 20mm.

In accordance with the invention, the skid moves relative to the chassis during adjustment of the height-of-cut such that the skid is maintained at or above a minimum height position for the full height-of-cut adjustment range. The skid may move relative to chassis for the full height-of-cut adjustment range or for only part of the range.

In the embodiment where the skid moves relative to chassis for the full height-of-cut adjustment range, the skid may be maintained at the minimum height position, independent of the height-of-cut. Alternatively, the skid may rise above the minimum height position as the height-of-cut is adjusted (e.g. increases), and it may do this for all of the height-of-cut adjustment range. However, in this case, there is still a requirement for the skid to move relative to the chassis during adjustment of the height-of-cut, so the skid would need to rise at a different rate (e.g. more slowly) and not move directly with the chassis.

Another option is that the skid is maintained at the minimum height position for a portion of the height-of-cut adjustment range (e.g. at the lower end) and then rises above the minimum height position as the height-of-cut increases beyond a threshold point, for the remainder of the height-of-cut adjustment range. This two-stage operation may involve relative movement between the skid and the chassis for the full height-of-cut adjustment range, if in the second stage the skid rises at a different rate (e.g. more slowly) to the chassis. Alternatively, the skid may rise at the same rate as the chassis in the second stage, and therefore the skid moves relative to the chassis or for only part of the range (i.e. the first part).

The skid extends substantially the full width of the spacing between the rear wheels when viewed transversely (i.e. looking in a longitudinal direction). Longitudinally, the skid (or more precisely, the lowest point of the lower edge surface of the skid) may be positioned forward of the rear wheels, behind the rear wheels or between the rear wheels. "Between" the rear wheels is considered to be any point longitudinally within the longitudinal extent of the rear wheels, which is effectively any point longitudinally within their diameter. In most practical embodiments, the skid will be positioned rearward of the cutting deck so that the desired striping effect can be achieved after cutting, and therefore it is preferable that the skid will be positioned between or rearward of the rear wheels.

While the skid may be configured to pivot relative to the chassis as discussed further below, the skid itself preferably does not comprise any rotating parts in the sense that a roller does. The skid may take the form of a relatively flat, sheet-like component or it may have more of the appearance of a roller by being generally cylindrical. The skid may be made from any suitable material, which may be resilient or non-resilient. Preferably, the skid is made from a relatively rigid material. More preferably, the skid is made from a plastics material.

An important preferred feature of the present invention is that the skid is configured to accommodate uneven ground or individual obstacles such as bumps or kerbs. Preferably therefore, the skid is movable in a direction away from the minimum height position. The skid may be biased in a direction towards the minimum height position, for example by its own weight or by resilient means such as a spring, and the skid movable against the biasing force away from the minimum height position to a higher position.

The higher position will allow the lawnmower to pass more easily over uneven ground or other raised obstacles without the skid grounding out. If the skid is mounted behind the rear wheels, this movement also allows the lawnmower to be tilted backwards onto just its rear wheels when changing direction.

The higher position may be a position in which the lower edge of the skid is substantially flush with the lower edge of the lawnmower cutting deck, so that the skid does not provide any resistance to forward motion of the lawnmower.

Preferably, the skid is pivotally mounted to the chassis and is caused to pivot when the chassis and the pair of rear wheels move relative to one another during adjustment of the height-of-cut such that the skid is maintained at or above the minimum height position. Any suitable mechanism may be provided to achieve the pivoting of the skid, and the mechanism may be separate from or connected to the height-of-cut adjustment mechanism.

One preferred height-of-cut adjustment mechanism is the "E-gate" mechanism in which the rear wheels are connected by an axle extending in the transverse direction, the chassis and the axle being movable relative to one another to adjust the height-of-cut of the lawnmower by locating the axle in a selected one of a plurality of vertically-spaced recesses in a side opening of the chassis (i.e. the "E-gate"). In a preferred arrangement, the skid is pivotally mounted to the chassis and includes means engaging the axle such that movement of the axle relative to the chassis when adjusting the height-of-cut causes the skid to pivot relative to the chassis and to remain at or above the minimum height position. Preferably, the engaging means comprises an elongate slot for receiving the axle and the elongate slot may be configured to accommodate horizontal movement of the rear axle when adjusting the height-of-cut.

Another preferred height-of-cut adjustment mechanism is the "single point" mechanism in which each rear wheel is mounted on a stub axle on a pivot arm which pivots relative to the chassis during adjustment of the height-of-cut. In a preferred arrangement, the skid is pivotally mounted to the chassis and includes means engaging a cam surface on at least one of the pivot arms such that the movement of the pivot arm relative to the chassis when adjusting the height-of-cut causes the skid to pivot relative to the chassis and to remain at or above the minimum height position. Preferably, the engaging means comprises a generally hook-shaped arm.

Embodiments of the invention will now be described by way of example only and with reference to the accompanying drawings, in which:
Fig. 1 shows a perspective view of the underside of a lawnmower including a skid in accordance with a first embodiment of the invention;
Fig. 2 shows a perspective view of the skid component of the first embodiment;
Fig. 3 shows an underside perspective view of the lawnmower of Fig. 1 with some components removed for clarity;
Fig. 4 shows a side elevation of the lawnmower of Fig. 1 with the near wheel removed for clarity, in a first height-of-cut setting;
Fig. 5 shows a side elevation of the lawnmower of Fig. 4 in a second height-of-cut setting;
Fig. 6 shows a side elevation of the lawnmower of Fig. 4 with the skid being urged to a higher position;
Fig. 7 shows a perspective view of the underside of a lawnmower including a skid in accordance with a second embodiment of the invention;
Fig. 8 shows a perspective view of the skid component of the second embodiment;
Fig. 9 shows an underside perspective view of the lawnmower of Fig. 7 with the skid component removed for clarity;
Fig. 10 shows an underside perspective view of the lawnmower of Fig. 7 with the skid in the process of being mounted to the lawnmower;
Fig. 11 shows a side elevation of the lawnmower of Fig. 7 with the near wheel removed for clarity, in a first height-of-cut setting; and
Fig. 12 shows a side elevation of the lawnmower of Fig. 11 in a second height-of-cut setting.

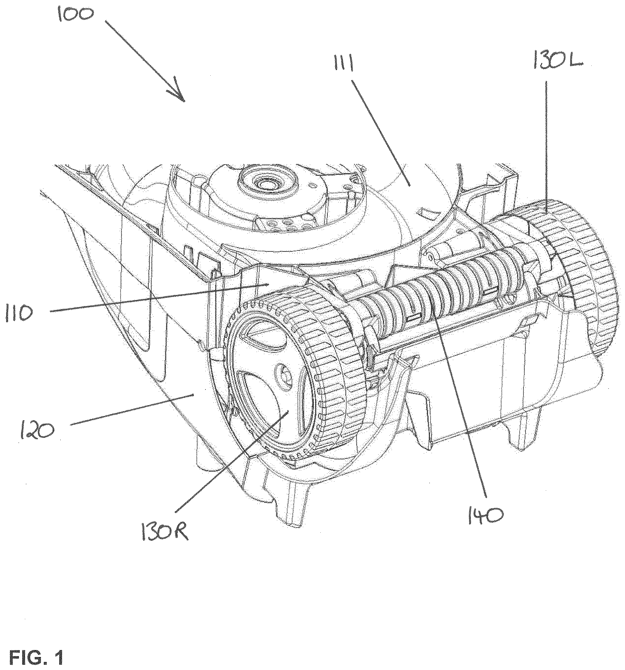

Referring to Fig. 1, the first embodiment is a lawnmower 100 which has a height-of-cut adjustment system referred to as a "single point" height-of-cut system, because the height-of-cut can be adjusted by means of a single operating lever, rather than having to adjust the height of each wheel individually. The mechanism is described in more detail in UK patent application GB-A-2371202, and only the relevant details of the system will be described here.

Lawnmower 100 comprises a chassis 110 to which is mounted a body 120. Formed in chassis 110 is a cutting bowl 111, within which a cutting blade (not shown) rotates to cut the grass, as is known in the art. Four wheels are mounted to the chassis 110, one at each corner, the two rear wheels 130L and 130R being shown in Fig. 1. Mounted transversely in between the rear wheels 130L and 130R is a skid 140 whose function is to smooth and direct the blades of grass to provide a striped appearance to the lawn, as discussed above.

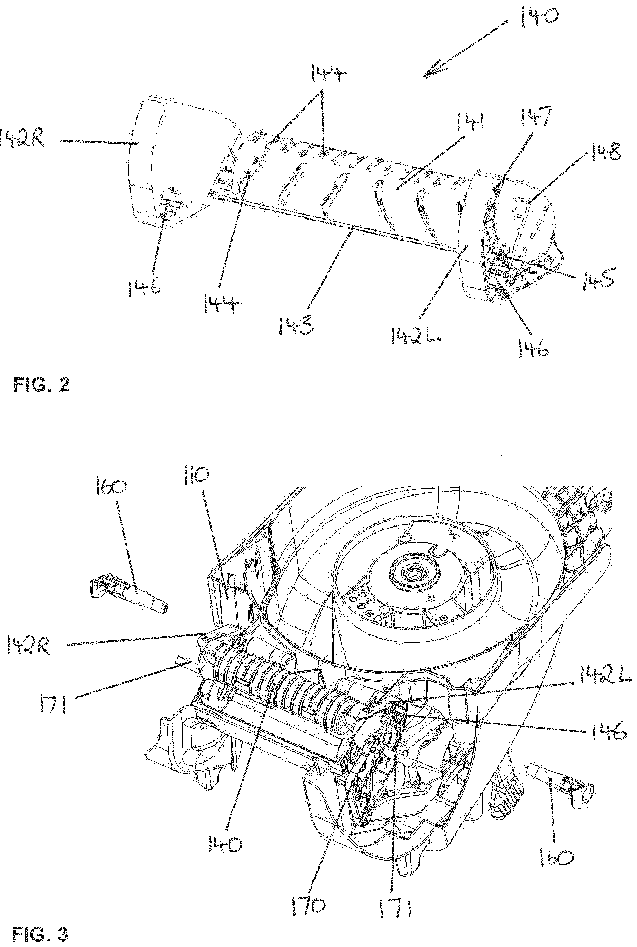

Turning to Fig. 2, skid 140 is shown in more detail. The skid comprises a main transverse body 141 and two side support brackets 142L and 142R. Skid component 140 is made from plastics material, and can be made from a single moulding if desired or from a plurality of separate components which are assembled together. Main body 141 is formed to have an appearance similar to a conventional roller, but of course it does not rotate relative to the support brackets 142L and 142R. Main body 141 may be formed in two halves connected by a live hinge 143 which allows the two halves to fold together for securement, such as by means of snap-fit fasteners, adhesive or the like. Main body 141 is provided with a plurality of longitudinally-extending ribs or ridges 144 to assist grass blade separation (longitudinal in this sense refers to the longitudinal direction of the lawnmower).

Support brackets 142L and 142R are generally planar although they are provided with strengthening webs 145. The function of the support brackets is to mount and support the skid main body 141 to the chassis 110, which they do at pivot/support apertures 146. The support brackets 142L and 142R also include a generally hook-shaped member 147 which engages with a cam surface on the height-of-cut adjustment mechanism, as will be described below.

Skid 140 is provided, at one or both sides, with a spring 148. A torsion spring is shown, but this could equally be a leaf or coil spring or any other suitable form of spring. The function of spring 148 is described in more detail below.

With reference to Fig. 3, the skid mounting arrangement is shown. Fixing plugs 160 are inserted through pivot/support apertures 146 and through corresponding apertures in the chassis 110 so that the skid 140 is fixed to the chassis but able to rotate relative to it. Alternatively the fixing plugs 160 may be fixed to the skid 140 and able to rotate with it in the chassis.

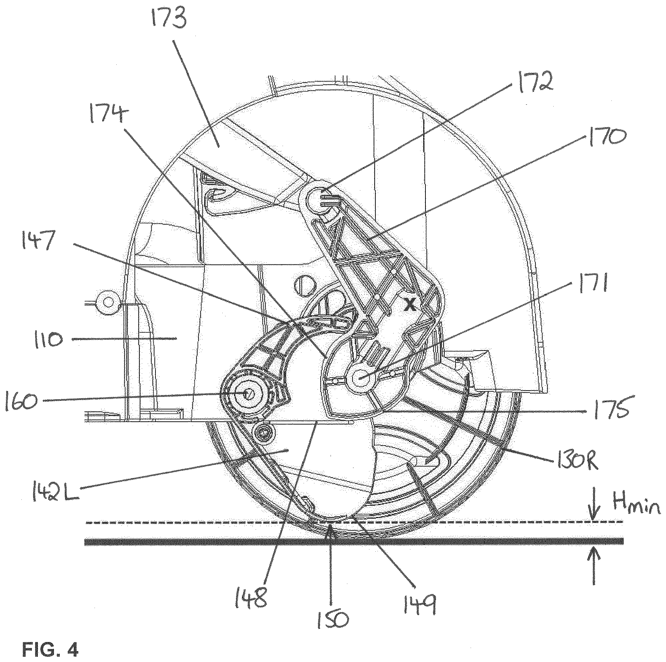

Relevant details of the height-of-cut adjustment mechanism and the relative movement of the skid 140 will now be described, with reference to Figs. 4-6, all of which show a side elevation of the lawnmower of the first embodiment with the nearest rear wheel 130L removed for clarity.

The main component of the "single point" height-of-cut system shown in Fig. 4-6 is angled arm 170. Arm 170 is pivotally mounted to the chassis at point X, and each wheel 130L and 130R is mounted on a respective stub axle 171 (see Fig. 3 also). When a force is applied to the upper end 172 of arm 170 by control rod 173, arm 170 pivots about point X and consequently causes the stub axle 171 to raise or lower with respect to the chassis 110.

Skid support bracket 142L is pivotally mounted by means of fixing plug 160 to chassis 110. Hook-shaped member 147 engages with upper cam surface 174 provided on angled arm 170. Spring 148 acts on lower cam surface 175 and therefore biases skid 140 towards the lowest position, which is determined by the profile of upper cam surface 174.

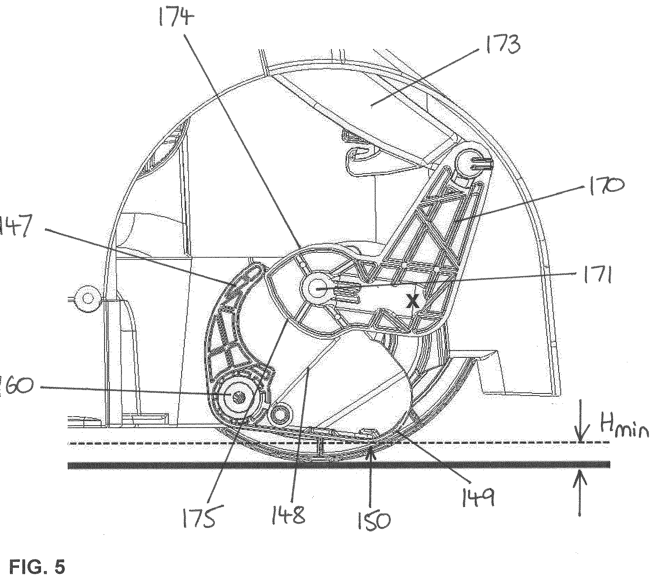

In accordance with the invention, the lower surface of the skid 140 has a substantially uniform profile across the majority of the width of the skid. The lower surface is shown generally as 149 in Figs. 4-6, and comprises the circular part of the lower surface. The lowest point of this surface and of the skid is shown as 150 which, in accordance with the invention, is a predetermined height above a transverse line connecting the lowest point of each wheel. In Figs. 4-6, the solid line represents flat ground, but also represents the horizontal plane containing the transverse line connecting the lowest point of each wheel. The dashed line represents the horizontal plane containing the transverse line which is the lowest extent of the skid 140. Therefore, the predetermined height of the skid is the distance between these two horizontal planes, which in Figs. 4 and 5 is shown as Hₘᵢₙ.

In Fig. 4, the lawnmower is shown in a first height-of-cut setting which is relatively high. In Fig. 5, a lower height-of-cut setting is shown. Compared to Fig. 4, control rod 173 has caused arm 170 to rotate in a clockwise direction about pivot point X. Stub axle 171 therefore moves upwards relative to the lawnmower chassis, causing the height-of-cut to reduce. Hook-shaped member 147 engages with a different part of upper cam surface 174 which is configured to raise the skid 140 relative to the chassis so that Hₘᵢₙ is maintained. Spring 148 continues to act on lower cam surface 175 to bias the skid 140 towards the lowest position.

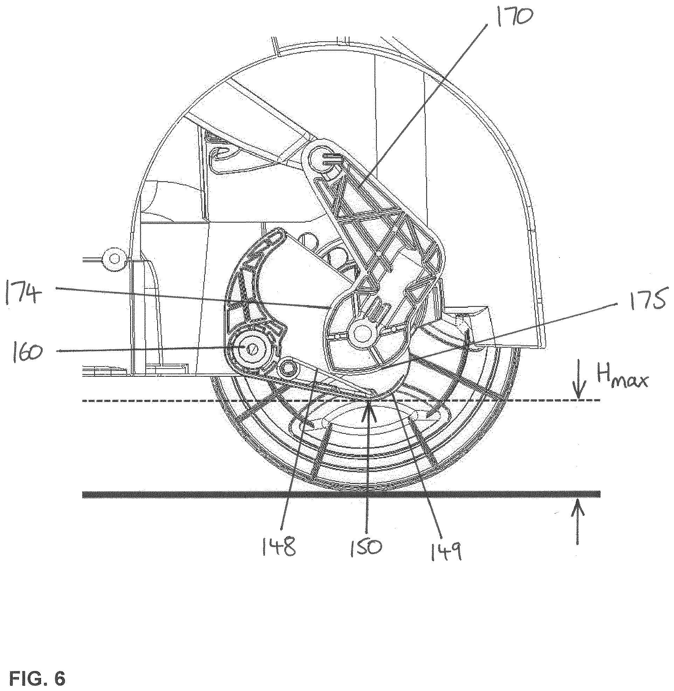

Fig. 6 shows how the skid 140 may be pushed upwards against the biasing force of spring 148 acting on lower cam surface 175, for example by an obstacle. As the skid is urged upwards, it rotates in an anti-clockwise direction about fixing plug 160 until the ends of spring 148 meet (as shown in Fig. 6). At this point, the lowest edge 150 of the skid is a maximum distance Hₘₐₓ above the horizontal plane containing the transverse line connecting the lowest point of each wheel.

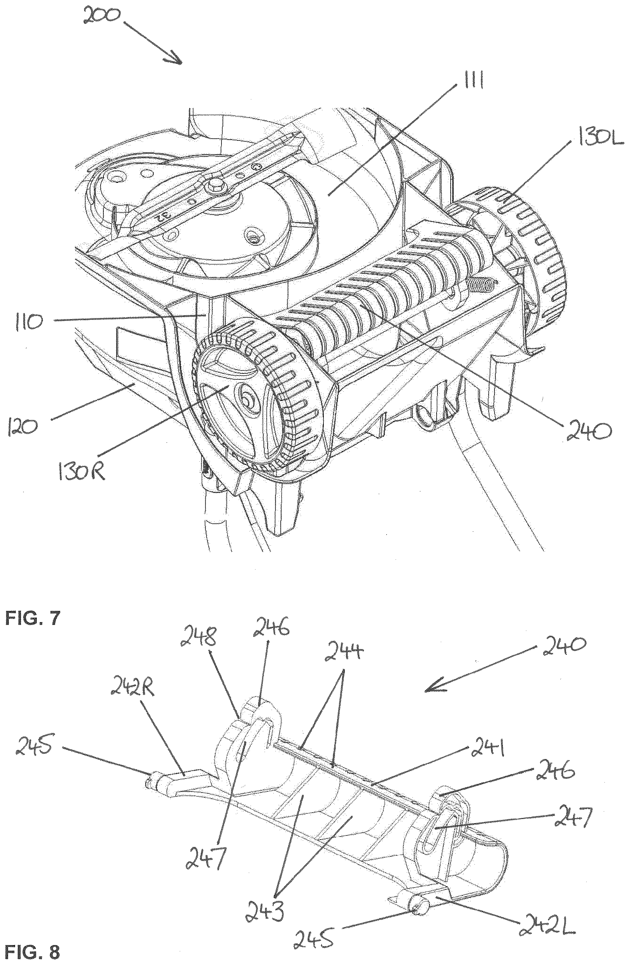

A second embodiment of the invention is shown in Figs. 7-12, in which the height-of-cut adjustment mechanism is the "E-gate" mechanism. In this arrangement, the height-of-cut is adjusted by locating the axle in a selected notch in the side of the chassis, the overall opening having the shape of the letter "E". The mechanism is described in more detail in UK patent application GB-A-2352956, and only the relevant details of the system will be described here.

Similar components to the first embodiment are given the same reference numbers, and only the differences will be described in detail. With reference to Fig. 7, lawnmower 200 is fitted with a second embodiment of skid 240.

Skid 240 is shown in more detail in Fig. 8 and comprises a main transverse body 241 and two side support brackets 242L and 242R. Skid component 240 is made from plastics material, and can be made from a single moulding if desired or from a plurality of separate components which are assembled together. Main body 241 is formed to have a lower exterior surface which is similar in appearance to a conventional roller, but of course there is no rotation relative to the support brackets 242L and 242R. In this embodiment, main body 241 is a hollow half cylinder with spaced support webs 243 providing structural rigidity. Main body 241 is provided with a plurality of longitudinally-extending ribs or ridges 244 to assist grass blade separation (longitudinal in this sense refers to the longitudinal direction of the lawnmower).

Support brackets 242L and 242R extend to pivot projections 245 which are pivotally mounted in apertures in the chassis 110. Skid 240 is provided with two axle brackets 246 which each have an elongate slot 247 to receive the axle, as described below. A gap 248 is provided in each axle bracket so that the axle can snap into elongate slot 247.

Although not shown in the drawings, skid 240 may be provided with a spring to function in a similar manner to spring 148 of the first embodiment.

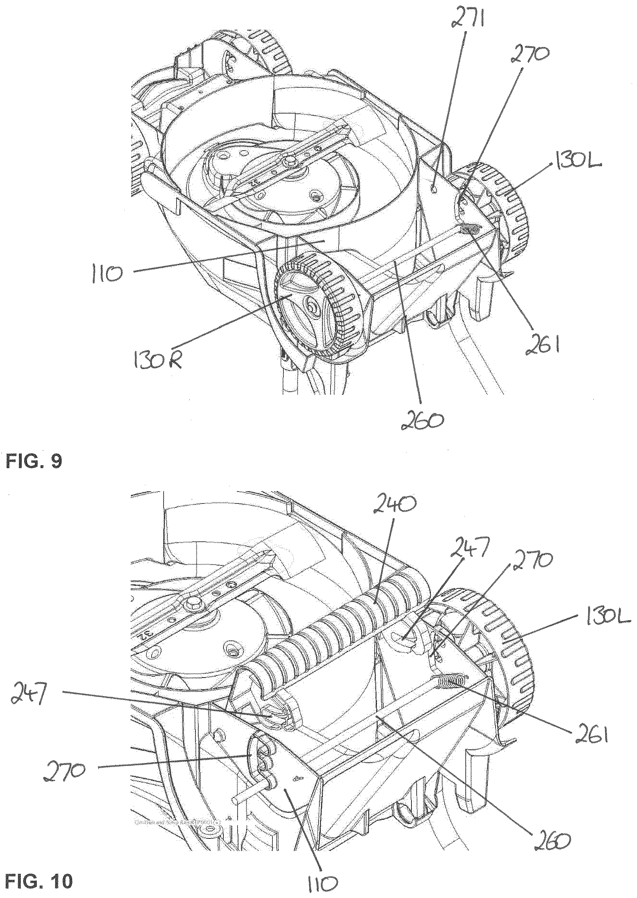

With reference to Fig. 9, which has the skid 240 removed for clarity, wheels 130L and 130R are mounted on a single axle 260 which is located in two E-shaped apertures or E-gates 270 provided in each side of the chassis 110. Different heights-of-cut can be selected by selecting the appropriate notch in the E-gate to locate the axle 260. A spring 261 is provided to urge the axle into the selected notch. Pivot apertures 271 are also provided in the chassis 110, into which pivot projections 245 are inserted when the skid 240 is mounted to the lawnmower, as shown in Fig. 10.

In Fig. 10, with pivot projections 245 inserted into pivot apertures 271, skid 240 can be rotated towards axle 260 so that axle brackets 246 snap over and locate the axle in the elongate apertures 247.

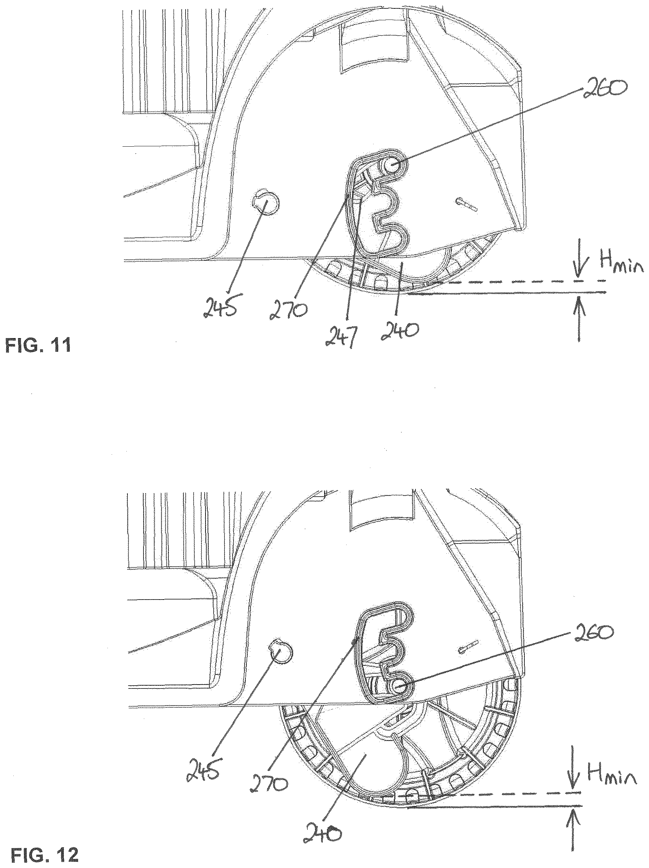

With reference to Figs. 11 and 12, two different heights-of-cut are shown. As the axle moves vertically downwards from the lowest height-of-cut setting (Fig. 11) to the highest (Fig. 12), by virtue of being located in elongate aperture 247, axle 260 causes the skid 240 to rotate in a clockwise direction about pivot projection 245 so that the skid 240 moves downwards relative to chassis 110 and so that the predetermined height of the skid is maintained at Hₘᵢₙ. Aperture 247 is elongate so that horizontal movement of the axle 260 relative to the chassis during adjustment of the height-of-cut can be accommodated.

## Claims

1. A lawnmower (100) comprising a chassis (110), a pair of rear wheels (130L, 130R) with one wheel mounted at each side of the chassis (110), wherein the chassis (110) and the pair of rear wheels (130L, 130R) are movable relative to one another to adjust the height-of-cut of the lawnmower (100) within a range of heights-of-cut, **characterized in that**, a transversely mounted skid (140) which extends substantially the full width of the spacing between the rear wheels (130L, 130R), the lower surface of the skid (140) having a substantially uniform profile across the majority of its width, and wherein the skid (140) moves relative to the chassis (110) during adjustment of the height-of-cut such that the skid (140) is maintained at or above a minimum height position (Hₘᵢₙ) for the full height-of-cut adjustment range, the minimum height position (Hₘᵢₙ) being a position in which the lowest point of the lower surface profile (149) of the skid (140) is at a predetermined height above a transverse line connecting the lowest point of each wheel.

2. The lawnmower (100) of claim 1, in which the skid (140) is maintained at the minimum height position (Hₘᵢₙ), independent of the height-of-cut.

3. The lawnmower (100) of claim 1, in which the skid (140) rises above the minimum height position (Hₘᵢₙ) as the height-of-cut is adjusted.

4. The lawnmower (100) of any preceding claim, in which the lowest point of the lower surface profile (149) of the skid (140) is positioned longitudinally between the longitudinal extent of the rear wheels (130L, 130R).

5. The lawnmower (100) of any of claims 1 to 3, in which the lowest point of the lower surface profile (149) of the skid (140) is positioned longitudinally rearward of the longitudinal extent of the rear wheels (130L, 130R).

6. The lawnmower (100) of any preceding claim, in which the skid (140) is made of a rigid material.

7. The lawnmower (100) of any preceding claim, in which the lower surface profile (149) of the skid (140) is substantially curved or circular to form a generally cylindrical transverse portion of the skid (140).

8. The lawnmower (100) of any preceding claim, in which the skid (140) is resiliently biased in a direction towards the minimum height position (Hₘᵢₙ) and in which the skid (140) is movable against the biasing force away from the minimum height position (Hₘᵢₙ) to a higher position.

9. The lawnmower (100) of any preceding claim, in which the skid (140) is pivotally mounted to the chassis (110) and is caused to pivot when the chassis (110) and the pair of rear wheels (130L, 130R) move relative to one another during adjustment of the height-of-cut such that the skid (140) is maintained at or above the minimum height position (Hₘᵢₙ).

10. The lawnmower (100) of any preceding claim, in which the rear wheels (130L, 130R) are connected by an axle extending in the transverse direction, the chassis (110) and the axle being movable relative to one another to adjust the height-of-cut of the lawnmower (100), and in which the skid (140) is pivotally mounted to the chassis (110) and includes means engaging the axle such that movement of the axle relative to the chassis (110) when adjusting the height-of-cut causes the skid (140) to pivot relative to the chassis (110) and to remain at or above the minimum height position (Hₘᵢₙ).

11. The lawnmower (100) of claim 10, in which the engaging means comprises an elongate slot for receiving the axle.

12. The lawnmower (100) of claim 10 or 11, in which the height-of-cut is adjusted by locating the rear axle in a selected one of a plurality of vertically-spaced recesses in a side opening of the chassis (110), the elongate slot accommodating horizontal movement of the rear axle when adjusting the height-of-cut.

13. The lawnmower (100) of any of claims 1 to 9, in which each rear wheel is mounted on a stub axle on a pivot arm which pivots relative to the chassis (110) during adjustment of the height-of-cut, the skid (140) being pivotally mounted to the chassis (110) and including means engaging a cam surface on at least one of the pivot arms such that the movement of the pivot arm relative to the chassis (110) when adjusting the height-of-cut causes the skid (140) to pivot relative to the chassis (110) and to remain at or above the minimum height position (Hₘᵢₙ).

14. The lawnmower (100) of claim 13, in which the engaging means comprises a generally hook-shaped arm.

## Patentansprüche

1. Rasenmäher (100), umfassend ein Fahrgestell (110), ein Paar Hinterräder (130L, 130R), wobei ein Rad an jeder Seite des Fahrgestells (110) angeordnet ist, wobei das Fahrgestell (110) und das Paar Hinterräder (130L, 130R) in Bezug aufeinander beweglich sind, um die Schneidhöhe des Rasenmähers (100) innerhalb eines Schneidhöhenbereichs einzustellen, **dadurch gekennzeichnet, dass** eine untere Oberfläche der quer montierten Kufe (140), die sich im Wesentlichen über die vollständige Breite des Abstands zwischen den Hinterrädern (130L, 130R) erstreckt, ein im Wesentlichen gleichförmiges Profil über den Großteil ihrer Breite aufweist, und wobei sich die Kufe (140) in Bezug auf das Fahrgestell (110) während der Einstellung der Schneidhöhe bewegt, sodass die Kufe (140) auf oder oberhalb einer Mindesthöhenposition (Hₘᵢₙ) für den vollen Schneidhöhenbereich gehalten wird, wobei die Mindesthöhenposition (Hₘᵢₙ) eine Position ist, bei welcher der niedrigste Punkt des unteren. Oberflächenprofils (149) der Kufe (140) auf einer vorbestimmten Höhe oberhalb einer Querlinie ist, welche den niedrigsten Punkt jedes Rades verbindet.

2. Rasenmäher (100) nach Anspruch 1, wobei die Kufe (140) unabhängig von der Schneidhöhe auf einer Mindesthöhenposition (Hₘᵢₙ) gehalten wird.

3. Rasenmäher (100) nach Anspruch 1, wobei die Kufe (140) über die Mindesthöhenposition (Hₘᵢₙ) hochfährt, wenn die Schneidhöhe eingestellt wird.

4. Rasenmäher (100) nach einem der vorhergehenden Ansprüche, wobei der niedrigste Punkt des unteren Oberflächenprofils (149) der Kufe (140) längs zwischen der Längsausdehnung der Hinterräder (130L, 130R) positioniert ist.

5. Rasenmäher (100) nach einem der Ansprüche 1 bis 3, wobei der niedrigste Punkt des unteren Oberflächenprofils (149) der Kufe (140) längs hinter der Längsausdehnung der Hinterräder (130L, 130R) positioniert ist.

6. Rasenmäher (100) nach einem der vorhergehenden Ansprüche, wobei die Kufe (140) aus einem steifen Material hergestellt ist.

7. Rasenmäher (100) nach einem der vorhergehenden Ansprüche, wobei das untere Oberflächenprofil (149) der Kufe (140) im Wesentlichen gekrümmt oder kreisförmig ist, um einen im Wesentlichen zylindrischen Querabschnitt der Kufe (140) zu bilden.

8. Rasenmäher (100) nach einem der vorhergehenden Ansprüche, wobei die Kufe (140) elastisch in einer Richtung zur Mindesthöhenposition (Hₘᵢₙ) vorgespannt ist und wobei die Kufe (140) gegen die Vorspannkraft weg von der Mindesthöhenposition (Hₘᵢₙ) zu einer höheren Position beweglich ist.

9. Rasenmäher (100) nach einem der vorhergehenden Ansprüche, wobei die Kufe (140) schwenkbar am Fahrgestell (110) montiert ist und zum Schwenken veranlasst wird, wenn sich das Fahrgestell (110) und das Paar Hinterräder (130L, 130R) in Bezug aufeinander während der Einstellung der Schneidhöhe bewegen, sodass die Kufe (140) auf oder oberhalb der Mindesthöhenposition (Hₘᵢₙ) gehalten wird.

10. Rasenmäher (100) nach einem der vorhergehenden Ansprüche, wobei die Hinterräder (130L, 130R) durch eine Achse miteinander verbunden sind, die sich in Querrichtung erstreckt, wobei das Fahrgestell (110) und die Achse in Bezug aufeinander beweglich sind, um die Schneidhöhe des Rasenmähers (100) einzustellen, und wobei die Kufe (140) schwenkbar am Fahrgestell (110) montiert ist und Mittel aufweist, die in die Achse eingreifen, sodass die Bewegung der Achse in Bezug auf das Fahrgestell (110) beim Einstellen der Schneidhöhe die Kufe (140) zum Schwenken in Bezug auf das Fahrgestell (110) und zum Verbleiben auf oder oberhalb der Mindesthöhenposition (Hₘᵢₙ) veranlasst.

11. Rasenmäher (100) nach Anspruch 10, wobei das Eingriffsmittel einen länglichen Schlitz zum Aufnehmen der Achse umfasst.

12. Rasenmäher (100) nach Anspruch 10 oder 11, wobei die Schneidhöhe durch Anordnen der hinteren Achse in einer ausgewählten von mehreren vertikal beabstandeten Aussparungen in einer Seitenöffnung des Fahrgestells (110) eingestellt wird, wobei der längliche Schlitz die horizontale Bewegung der hinteren Achse aufnimmt, wenn die Schneidhöhe eingestellt wird.

13. Rasenmäher (100) nach einem der Ansprüche 1 bis 9, wobei jedes hintere Rad auf einem Achsschenkel auf einem Schwenkarm montiert ist, der in Bezug auf das Fahrgestell (110) während der Einstellung der Schneidhöhe schwenkt, wobei die Kufe (140) schwenkbar an dem Fahrgestell (110) montiert ist und Mittel aufweist, die in eine Nockenoberfläche auf mindestens einem der Schwenkarme, sodass die Bewegung des Schwenkarms in Bezug auf das Fahrgestell (110) eingreifen, wenn das Einstellen der Schneidhöhe die Kufe (140) veranlasst, in Bezug auf das Fahrgestell (110) zu schwenken und auf oder oberhalb der Mindesthöhenposition (Hₘᵢₙ) zu bleiben.

14. Rasenmäher (100) nach Anspruch 13, wobei das Eingriffsmittel einen im Allgemeinen hakenförmigen Arm umfasst.

## Revendications

1. Tondeuse à gazon (100), comprenant un châssis (110), une paire de roues arrière (130L, 130R), avec une roue montée de chaque côté du châssis (110), le châssis (110) et la paire de roues arrière (130L, 130R) pouvant être déplacés les uns par rapport aux autres pour ajuster la hauteur de coupe de la tondeuse à gazon (100) dans une gamme de hauteurs de coupe, **caractérisée en ce qu'**un patin (140) monté transversalement, qui s'étend substantiellement sur toute la largeur de l'espacement entre les roues arrière (130L, 130R), la surface inférieure du patin (140) ayant un profil substantiellement uniforme sur la majorité de sa largeur, et le patin (140) se déplaçant par rapport au châssis (110) lors de l'ajustement de la hauteur de coupe de telle sorte que le patin (140) soit maintenu à ou au-dessus d'une position en hauteur minimale (Hₘᵢₙ) sur toute la plage d'ajustement de la hauteur de coupe, la position en hauteur minimale (Hₘᵢₙ) étant une position dans laquelle le point le plus bas du profil de surface inférieur (149) du patin (140) est à une hauteur prédéterminée au-dessus d'une ligne transversale reliant le point le plus bas de chaque roue.

2. Tondeuse à gazon (100) selon la revendication 1, dans laquelle le patin (140) est maintenu à la position en hauteur minimale (Hₘᵢₙ), indépendamment de la hauteur de coupe.

3. Tondeuse à gazon (100) selon la revendication 1, dans laquelle le patin (140) s'élève au-dessus de la position en hauteur minimale (Hₘᵢₙ) alors que la hauteur de coupe est ajustée.

4. Tondeuse à gazon (100) selon l'une quelconque des revendications précédentes, dans laquelle le point le plus bas du profil de surface inférieur (149) du patin (140) est positionné longitudinalement entre l'étendue longitudinale des roues arrière (130L, 130R).

5. Tondeuse à gazon (100) selon l'une quelconque des revendications 1 à 3, dans laquelle le point le plus bas du profil de surface inférieur (149) du patin (140) est positionné longitudinalement vers l'arrière de l'étendue longitudinale des roues arrière (130L, 130R).

6. Tondeuse à gazon (100) selon l'une quelconque des revendications précédentes dans laquelle le patin (140) est fabriqué en un matériau rigide.

7. Tondeuse à gazon (100) selon l'une quelconque des revendications précédentes, dans laquelle le profil de surface inférieur (149) du patin (140) est substantiellement courbe ou circulaire pour former une portion transversale généralement cylindrique du patin (140).

8. Tondeuse à gazon (100) selon l'une quelconque des revendications précédentes, dans laquelle le patin (140) est sollicité élastiquement dans une direction vers la position en hauteur minimale (Hₘᵢₙ) et dans laquelle le patin (140) peut être déplacé à l'encontre de la force de sollicitation à l'écart de la position en hauteur minimale (Hₘᵢₙ) dans une position plus élevée.

9. Tondeuse à gazon (100) selon l'une quelconque des revendications précédentes, dans laquelle le patin (140) est monté de manière pivotante sur le châssis (110) et est amené à pivoter lorsque le châssis (110) et la paire de roues arrière (130L, 130R) se déplacent les uns par rapport aux autres au cours de l'ajustement de la hauteur de coupe de telle sorte que le patin (140) soit maintenu à ou au-dessus de la position en hauteur minimale (Hₘᵢₙ).

10. Tondeuse à gazon (100) selon l'une quelconque des revendications précédentes, dans laquelle les roues arrière (130L, 130R) sont connectées par un essieu s'étendant dans la direction transversale, le châssis (110) et l'essieu pouvant être déplacés l'un par rapport à l'autre pour ajuster la hauteur de coupe de la tondeuse à gazon (100), et dans laquelle le patin (140) est monté de manière pivotante sur le châssis (110) et comporte un moyen d'engagement avec l'essieu de telle sorte que le mouvement de l'essieu par rapport au châssis (110) lors de l'ajustement de la hauteur de coupe provoque le pivotement du patin (140) par rapport au châssis (110) et son maintien à ou au-dessus de la position en hauteur minimale (Hₘᵢₙ).

11. Tondeuse à gazon (100) selon la revendication 10, dans laquelle le moyen d'engagement comprend une fente allongée pour recevoir l'essieu.

12. Tondeuse à gazon (100) selon la revendication 10 ou 11, dans laquelle la hauteur de coupe est ajustée en positionnant l'essieu arrière dans l'un sélectionné parmi une pluralité de renfoncements espacés verticalement dans une ouverture latérale du châssis (110), la fente allongée autorisant le mouvement horizontal de l'essieu arrière lors de l'ajustement de la hauteur de coupe.

13. Tondeuse à gazon (100) selon l'une quelconque des revendications 1 à 9, dans laquelle chaque roue arrière est montée sur un bout d'essieu sur un bras de pivot qui pivote par rapport au châssis (110) au cours de l'ajustement de la hauteur de coupe, le patin (140) étant monté de manière pivotante sur le châssis (110) et comportant un moyen d'engagement avec une surface de came sur au moins l'un des bras de pivot de telle sorte que le mouvement du bras de pivot par rapport au châssis (110) lors de l'ajustement de la hauteur de coupe provoque le pivotement du patin (140) par rapport au châssis (110) et son maintien à ou au-dessus de la position en hauteur minimale (Hₘᵢₙ).

14. Tondeuse à gazon (100) selon la revendication 13, dans laquelle le moyen d'engagement comprend un bras généralement en forme de crochet.
